# EUROPEAN PATENT SPECIFICATION

(11) **EP 2 231 922 B1**
(45) Date of publication and mention of the grant of the patent: **03.07.2013**
(21) Application number: 08803848.4
(22) Date of filing: 08.09.2008
(51) Int. Cl.: D21C 9/08, D21H 21/02, D21B 1/32

(54) **REMOVAL OF STICKIES FROM A PULP SUSPENSION, REDUCTION OF CALCIUM COMPOUNDS IN REJECT AND USE OF CARBON DIOXIDE IN PAPERMAKING**
VERFAHREN ZUM ENTFERNEN VON STICKIES AUS EINER PAPIERSTOFFSUSPENSION, REDUZIERUNG VON CALCIUMVERBINDUNGEN IN AUSSCHUSS UND VERWENDUNG VON KOHLENSTOFFDIOXID BEI DER PAPIERHERSTELLUNG
RETRAIT D'ÉLÉMENTS COLLANTS D'UNE SUSPENSION DE PÂTE À PAPIER, RÉDUCTION DE COMPOSÉS DE CALCIUM DANS LES DÉCHETS ET UTILISATION DE DIOXYDE DE CARBONE DANS LA FABRICATION DU PAPIER

(30) Priority: 13.09.2007 FI 20075638
(43) Date of publication of application: 29.09.2010
(73) Proprietor: Linde AG, 80331 München (DE)
(72) Inventor: HAIAS, Liviu, S-85645 Sundsvall (SE); SCHMID, Luminita, Claudia, A-A 4664 Oberweis (AT)
(86) International application number: PCT/EP2008/061880
(87) International publication number: WO 2009/034056

(56) References cited:
- EP-A- 0 281 273
- EP-A- 0 989 229
- WO-A-2004/048680
- WO-A-2008/028960
- US-A- 6 159 381
- US-A1- 2002 066 880
- US-A1- 2006 048 908

## Description

The present invention relates to the use of carbon dioxide for the removal of stickies from a pulp suspension. The invention also relates to the use of carbon dioxide for decreasing the content of calcium carbonate in flotation reject and calcium oxide in flotation reject ash. The present invention provides a reduction of stickies from recycled pulp. Consequently, the invention relates to a process for the removal of stickies from a pulp suspension and to a process of using carbon dioxide in papermaking. The carbon dioxide is preferably added to an aqueous pulp suspension containing recycled fibers, calcium ions and stickies in a flotation operation in the deinking of the aqueous pulp suspension.

### Background

Paper industry is using increasing amounts of recycled fibers in the production of paper. Part of the recycled fiber raw material is printed, coated and glued and in order to be able to prepare good quality paper, printing ink and stickies need to be removed from the pulp before it is made into paper. Stickies can originate from natural components such as resins and waxes from the wood or from synthetic polymers such as polyvinyl acetate and polyvinyl acrylate from thermoplastic adhesives, plastics, coating binders, etc. in the recycled fibers. The high temperatures typically used in hot disintegration and bleaching processess often the synthetic polymers and make them into stickies which are difficult to remove.

Stickies are commonly derived from organic components such as resins and waxes or from synthetic polymers such as polyvinyl acetate and polyvinyl acrylate in adhesives. Stickies are generally categorized according to size into macro stickies and micro stickies. Macro stickies are larger than 100-150 µm and can be removed by screening. Stickies smaller than 100-150 µm are classified as micro stickies and colloidal stickies. Most micro stickies and colloidal stickies are the result of a mechanical, thermal and/or chemical disintegration of macro stickies.

When recovered paper is converted into paper making pulp, the recovered paper is first broken down into individual fibers in a pulping process which is performed at high pH and at an elevated temperature. Then large contaminants, such as paper clips and foils, are separated from the fibers e.g. by screening and most of the detached printing ink is removed by flotation or washing. The fibers are usually dewatered after this unit operation(s) and water is separated from the fibers and supplied back upstream of the process. The fibers are typically subjected to a primary flotation and washing step and they may be bleached with hydrogen peroxide. Then the bleached fibers are typically cleaned in a second flotation step called post-flotation and dewatered to remove as much as possible of the liquid.

Flotation is the most common method used for removing the printing ink from recycled fibers. Most of the printing inks used are hydrophobic and this feature is used to help the removal of the ink. In the flotation step, air or some other gas is injected into the suspension and bubbles are formed in the suspension. Hydrophobic particles attach to the bubbles whereas hydrophilic particles remain in the suspension. The bubbles move to the surface of the suspension forming a foam layer which is easy to remove. Part of the stickies remaining in the pulp is also removed in the flotation.

Pulping of recovered paper is performed with sodium hydroxide at a pH of about 9 to 10 while most paper machines operate in the pH ranges around neutral, typically at pH values between pH 6.5 and 7.8. Because the water system of modem paper making processes is closed to a very high degree, the same water circulates in the whole mill. Thus, back water or clear filtrate from the paper machine is typically used for diluting the pulp suspensions also in the pulping and flotation steps. Bleaching and dilution with paper machine water gradually lowers the pH of the pulp suspension coming from the pulper and the pH of the pulp suspension entering the flotation typically has a pH below 8. Some calcium carbonate filler included in the recovered paper dissolves and provides calcium ions in the suspension. Calcium is needed in the drinking process in order to form soap for agglomerating the non-ionic ink particles.

Providing sufficient calcium ions for the deinking by flotation has been discussed in various prior art documents. Thus, EP 0 030 057 discloses a method of deinking paper pulp using a phosphate ester of a monohydric alcohol with 8-22 carbon atoms, or a mixture of such esters, as a collector during flotation. The document teaches that it is important for good results in the flotation, as it is when known collectors are used, that the water to be used is of sufficient hardness. The hardness can be increased by addition of e.g. calcium chloride.

EP 0 657 578 discloses a process for treating recovered paper for paper manufacture in which in a first stage recovered paper is repulped accompanied by the addition of deinking chemicals and the printing ink is dissolved and dispersed, and in a second stage the printing ink particles are removed from the waste paper stock suspension by flotation. The repulping and flotation are performed in the neutral range with a pH-value between 6.5 and 8.8 without using fatty acids or soaps. The deinking chemicals comprise nonionic surfactants and the process is not dependent on the calcium ion content in the process.

US 6,426,200 and US 2002/0142452 disclose a method for deinking toner from noncontact and mixtures of noncontact and contact-printed recovered paper. The method comprises the steps of pulping the recovered paper to produce a pulp slurry; adjusting the pH of said pulp slurry to between about 4 and about 6; adding a surfactant to the pulp slurry; adding a cation to the pulp slurry, adding deinking enzymes to said pulp slurry; continuing pulping for at least 10 minutes to produce a treated pulp slurry comprising toner particles and pulp; terminating the activity of said deinking enzymes; and separating the toner particles from the pulp.

US 6,159,381 provides a process for the treatment of a suspended solids containing aqueous effluent or reject derived from a plant for the treatment of recovered paper by deinking which allows the fines contained in the effluent or reject to be recovered in a form in which such fines can be reused in a paper making process. A source of alkaline earth metal ions and a source of carbonate ions are added into the aqueous suspension to form therein a composite particulate material. The source of alkaline earth metal ions is preferably calcium hydroxide.

The pulp material supplied into a deinking plant differs considerably depending on the type and quality of the recovered paper. This leads often to problems in the process since it is difficult to keep the conditions stable. Because of the varying material used, the pH and hardness in the flotation varies, which leads to instable conditions in the flotation and poor deinking results. Improper deinking causes poor quality of the pulp and paper subsequently produced.

The prior art has observed that calcium ions improve the deinking and hence, it has been suggested that soluble calcium compounds such as calcium chloride or calcium hydroxide be added to provide calcium ions for the flotation. However, the addition of calcium compounds cannot easily be varied in accordance with the variations in the incoming pulp material. Furthermore, calcium chloride provides chloride ions in the system. These have a detrimental effect on the equipment because of their corroding nature. Calcium hydroxide has a low solubility compared to sodium hydroxide and it is difficult to provide sufficiently calcium ions in this way. There may also be undissolved calcium hydroxide particles left in the process which may be harmful later in the process.

A typical way of providing sufficient calcium for the deinking flotation has been to add calcium hydroxide into the disintegration of recovered paper to partly replace sodium hydroxide. However, calcium hydroxide added at this point suffers from the same drawbacks as mentioned above.

WO 2006/123996 discloses a method for improving the deinking of recycled fibers in flotation by stabilizing the hardness of the aqueous part of the pulp suspension. The method uses gaseous carbon dioxide to provide a weak acid for dissolving calcium carbonate contained in the recovered paper. The carbon dioxide reduces and stabilizes the pH and the dissolution of calcium carbonate increases the hardness of the pulp suspension while minimizing fluctuations in the hardness value.

WO 2004/048680 discloses a process for the deinking of office paper and newsprint by a two-step flotation method without any intermediate washing or concentration step between the flotation steps. The first flotation is an alkaline flotation step and the pH of the second flotation step is reduced to pH 5 to 7.5 with carbonic acid. The loss of chalk filler due to the addition of carbon dioxide is said to be low.

EP 0 737 774 discloses a method for treating a reject slurry from a flotation plant with carbon dioxide in order to precipitate calcium carbonate in said slurry. The precipitate can be reused as coating or filler material.

US 4,243,478 discloses a process for maintaining the required hardness in water used in the deinking .of recycled pulps by flotation. The calcium ions required for the deinking reaction with soaps and other chemicals are provided by dissolving calcium carbonate and carbon dioxide in the water in a separate mixing container.

Although the prior art has noted the need for providing a sufficient hardness in the flotation liquid for reaction with the soaps and other chemicals used for deinking, there is no indication of adjusting the hardness to improve the removal of micro stickies and colloidal stickies in the flotation. These stickies are a major problem in the use of recycled fibers in paper making. Deinking processes are typically construed to detach the ink particles from the fibers and to remove as much as possible of the detached ink by flotation. However, standard flotation processes remove only a part of the stickies. Thus, there is a need for improving the removal of micro stickies and colloidal stickies from pulp suspensions obtained from recovered paper.

### Summary of the invention

The present invention provides a way of improving the removal of stickies from pulp suspensions based on recovered paper. According to the invention carbon dioxide is used to provide a sufficient amount of calcium ions in the pulp suspension to allow stickies to agglomerate with calcium ions and to be removed from the suspension.

The present invention is defined in the appended claims, the contents of which is included in this specification.

Thus, the present invention comprises the use of carbon dioxide for the removal of stickies, especially micro stickies and colloidal stickies, by flotation from a pulp suspension containing recycled fibers. These stickies may be removed by deinking flotation, typically in a post-flotation step. Removal of the stickies with the deinking improves the papermaking process and increases the capacity of a paper mill to use deinked fibers in the production of paper.

According to the invention, the carbon dioxide can also be used for decreasing the content of calcium carbonate in the flotation reject and the content of calcium oxide in flotation reject ash.

The present invention provides a process for the removal of stickies from a pulp suspension, comprising providing an aqueous pulp suspension containing recycled fibers, calcium ions and stickies; adding carbon dioxide to said pulp suspension for adjusting the pH of said suspension to a value below 8.3 to control the amount of calcium ions in said suspension by preventing precipitation of calcium carbonate; causing stickies contained in said suspension to agglomerate with said calcium ions; removing the agglomerates from said suspension by flotation; and subjecting the resulting pulp suspension to a series of papermaking steps to produce paper or board.

The pH value of the suspension is typically adjusted to a pH between 7.0 and 7.8, preferably between 7.2 and 7.5, by adding 0.5 to 7 kg carbon dioxide per ton dry fiber, preferably 1.5 to 5 kg/ton dry fiber.

In one embodiment of the invention, negatively charged micro stickies and colloidal stickies are caused to form agglomerates in a flotation operation, preferably in a separate post-flotation operation of a de-inking process.

According to the invention it has been found that the amount of calcium ions in the suspension should be controlled to a value of more than 100 mg Ca²⁺/l in order to provide removal of a significant amount of micro stickies and colloidal stickies in said flotation.

One embodiment of the invention provides a method of using carbon dioxide in papermaking comprising the steps of providing an aqueous pulp suspension containing recycled fibers, calcium carbonate, calcium ions and stickies; adding carbon dioxide to said pulp suspension in an amount sufficient for adjusting the pH of said suspension to a value below 8.3; controlling the amount of carbon dioxide added so as to provide in said pulp suspension an amount of calcium ions in excess of 100 mg Ca²⁺/l; causing stickies contained in said suspension to agglomerate with said calcium ions; removing the agglomerates from said suspension by flotation; and subjecting the resulting pulp suspension to a series of papermaking steps to produce paper or board.

The present invention provides a way to improve the removal of micro stickies and colloidal stickies by flotation. The invention stabilizes pH and hardness and thus reduces fluctuations in the flotation. The present invention also provides a way to provide a desired level of pH and/or hardness for said removal of stickies by flotation.

### Detailed description of the invention

The invention will now be described in greater detail with reference to an embodiment of the invention, which describes a deinking process with removal of stickies in a post-flotation step. Although the process is described in detail in connection with a post-flotation process, it is clear that also other flotation steps and other process steps, where the required conditions of pH, calcium ion concentration and reject removal can be accomplished, are useful for operating the present invention.

In the process of the present detailed description, a pulp suspension, which is based on recycled fibers and which contains printing ink, calcium carbonate, calcium ions and stickies, is processed in a deinking process comprising two essentially separate circulating water loops, one for a primary flotation and a second one for a post-flotation. The water from screening and washing stages is fed counter currently, i.e. upstream in the process in each loop. The circulating waters are used to wash and dilute the pulp suspension at various positions of the process. Dewatered pulp obtained after the post-flotation unit is fed to a paper machine storage tower and is used to produce paper in a conventional manner.

In the flotation processes, ink and other substances, such as stickies are separated from the fibers. The principle of flotation is as follows: Air or other gas bubbles are introduced into a diluted fiber suspension of 0.8%-1.5% consistency. The water-repellent ink particles attach to the bubbles and rise to the surface. Agglomerates of stickies and other substances also rise to the surface. The hydrophilic fibers remain in the water phase. The foam containing ink and stickies is removed mechanically from the surface of the slurry. Flotation requires large hydrophobic particles and therefore insoluble calcium soaps are typically used in the process to attach on the surface of the particles and for forming big agglomerates, which can then be removed.

The pulping of recovered paper is performed under strongly alkaline conditions and the primary flotation unit generally operates under alkaline conditions. The pH is continuously lowered as the pulp suspension proceeds in the system and the post-flotation unit typically operates under acidic or neutral conditions.

In connection with the invention it was observed that although the pH of the pulp suspension entering the post-flotation unit had been reduced with an acid to a pH between 7 and 8, the pH tended to rise above 8 in the flotation unit and, as a result, calcium ions derived mainly from calcium carbonate dissolved in the suspension started to precipitate as calcium carbonate during the flotation. The solid calcium carbonate formed rose to the surface with the air bubbles and the ink particles and was removed with the reject. This increased the amount of solid reject and, moreover, when the reject slurry was incinerated the increased amount of calcium carbonate in the slurry increased the amount of calcium oxide on the ash. The consequence was that the pH of the ash was above 11. Such a high pH of the ash caused difficulties in the handling and transportation of the ash.

Without wishing to be bound by any theory, it is now believed that the pH rose in the flotation because the flotation air removed dissolved carbon dioxide from the aqueous phase of the pulp suspension.

In order to reduce the amount of calcium compounds in the reject, the pH of the pulp suspension entering the post-flotation unit was reduced by feeding gaseous carbon dioxide to the incoming pulp suspension or to the water used to dilute the pulp suspension. When the pH was maintained at a value below 8.3 with carbon dioxide, calcium carbonate precipitation no longer occurred and the calcium carbonate content of the reject was reduced. This also provided less calcium oxide in the reject ash, and as a consequence thereof, a lower pH value of the ash was obtained.

When the pH of the suspension in the post-flotation was kept at a value below 8.3, the concentration of calcium ions in the solution increased partly because calcium carbonate no longer precipitated and partly because calcium carbonate contained in the pulp suspension dissolved. It was unexpectedly noted that with the lower pH provided by carbon dioxide and the consequent increased calcium ion concentration, the amount of stickies deriving from synthetic polymers was increased in the reject. The stickies which increased in the reject were especially micro stickies and colloidal stickies, which had agglomerated with calcium ions and rose to the surface and were removed with the reject. This unexpected positive effect of carbon dioxide on the removal of stickies improved the over-all process and reduced the amount of secondary stickies in the papermaking.

The carbon dioxide added to the flotation stage had additional benefits on the process. The pH and calcium ion concentration of the flotation process was easy to control with carbon dioxide and the pH had a better stability despite fluctuating incoming fluids than when the pH was adjusted with sulfuric acid or alum. Moreover, carbon dioxide is an environmentally friendly compound. The carbon dioxide added according to the invention was also effective in improving the dewatering in dewatering devices such as a disc filter down-stream of the addition of carbon dioxide.

The terms used in the present specification and claims have the meaning usually used in the field. In the following some more specific definitions are given for some of the terms used in the specification and claims.

"deinked pulp" comprises recycled fiber treated in a deinking process with removal of a large proportion of inks and some other contaminants. Recycled fibers can be mechanical (wood-containing DIP) or chemical fibers (wood-free DIP) depending on the recovered paper grade and its composition by paper grades. Recycled fibers are used in the production of recycled paper and board products. See also Papermaking Science and Technology: Book 7, Recycled Fiber and Deinking edited by L. Göttsching and H. Pakarinen, 2000.

The term "stickies" is used for mixtures of tacky organic compounds that enter the papermaking process with the recovered paper. The stickies can originate from natural components such as fatty acid or resin acids from the wood or from synthetic components that originate from coating binders, printing inks and adhesives. The stickies are often classified by the size of the sticky. Macro stickies are the stickies above a size of 100-150 µm which remain on slotted screen plates and can be removed from the process. Micro stickies pass the plates and have a size below 100 to 150 µm; typically from 100 µm to 100 nm. Colloidal stickies are stickies in the microscopic range of 10 to 100 nm.

The stickies can also be classified as "primary stickies" and "secondary stickies". Primary stickies are produced from adhesives during pulping and stock preparation. Secondary stickies result from soluble and hydrodispersible substances which are dispersed during stock preparation and remain in the pulp suspension. Due to secondary stickies there will be deposits in the paper machine area and black spots in the paper. Micro stickies and colloidal stickies are a cause of secondary stickies. Especially problematic are colloidal stickies based on polyvinyl acetate and/or ethylene vinyl acetate.

The term "hardness" refers to the hardness caused by calcium and/or magnesium ions in water or an aqueous solution. The ions may originate from fresh water used in the process, or from different chemicals added into the process, or from paper or wood raw material used in the process. Hardness can be measured in different ways. The abbreviation "°dH" stands for "deutsche Härte" (German hardness). The hardness value 1 °dH corresponds to about 0.18 mmol/l calcium and/or magnesium ions in a solutions.

"Alkalinity" is a measure of the sum of hydroxide, carbonate and bicarbonate ions minus hydrogen ions in a solution and it is not to be confused with pH. Alkalinity is determined by titration with an acid and is scientifically expressed in milliequivalents per liter (meq/1). In industry alkalinity is often expressed in terms based on the amount of calcium carbonate that would need to be dissolved in water to give the same alkalinity. It is typically expressed as mmol/l alkalinity, mmol/l CaCO₃ or as ppm or mg/l CaCO₃.

The term "flotation" refers to the removal of impurities and detrimental substances from a pulp suspension by causing them to rise to the surface of the liquid with the aid of a gas. The flotation can be performed in one step or in several consecutive steps.

The term "post-flotation" as used in the present specification and claims comprises a separate flotation step down-stream of at least one earlier flotation step and with a washing and/or bleaching step between said earlier flotation step and said post-flotation step.

The terms "improving" and "increasing" as used in the present specification and claims refers to a situation caused by the use of carbon dioxide in accordance with the present invention as compared to a situation without carbon dioxide.

The present invention relates generally to the use of carbon dioxide for the removal of stickies from a pulp suspension containing recycled fibers. The pulp suspension typically contains calcium carbonate, calcium ions and stickies derived from recovered paper. The stickies which are removed in the process are selected from micro stickies and colloidal stickies, which in conventional papermaking are the most difficult to remove.

In one embodiment of the invention the removal process comprises a drinking flotation process, in which the carbon dioxide is added to the pulp suspension. The carbon dioxide can be used for controlling the pH of the flotation process. The pH control allows control of the amount of micro stickies and colloidal stickies which are removed with the flotation reject.

The removal of stickies provides an increased capacity of a paper mill for producing paper from deinked pulp. Because the pulp has been purified by the removal of micro stickies and colloidal stickies, there will be less secondary stickies and the quality of the paper will not be impaired by the deinked pulp. Thus a larger proportion of the pulp used in the papermaking can be deinked pulp.

The use of carbon dioxide according to the present invention also decreases the content of calcium carbonate in flotation reject and the content of calcium oxide in flotation reject ash. If calcium carbonate is allowed to precipitate in the flotation, it will easily rise to the surface and be removed with the reject foam. It should be noted that the amount of calcium removed with the agglomerated stickies according to the present invention is very small compared to the amount normally removed as precipitated calcium carbonate.

For the removal of stickies according to the present invention carbon dioxide is added to a pulp suspension for adjusting the pH to a value below 8.3 and typically between 6.5 and 8.2. The pH will control the amount of calcium ions in the suspension. With a sufficient calcium ion content in the aqueous phase of the pulp suspension, micro stickies and colloidal stickies will be able to agglomerate in a sufficient degree and to be significantly removed with the reject foam.

A pulp suspension based on recovered paper includes a vast number of components, some of which are sticky or potentially sticky and some of which are not sticky. Among those which are sticky or potentially sticky, some are negatively charged. The negatively charged micro stickies and/or colloidal stickies will combine with positively charged calcium ions and form agglomerates or coacervates big enough to be transported to the surface by the air bubbles of a flotation process. In the course of the invention it has been found that especially micro stickies and/or colloidal stickies derived from polyvinyl acetate accumulate in the reject of a post-floatation process.

The removal of the agglomerated stickies can be performed by other means than by flotation, e.g. by washing or screening provided that the pH has been adjusted with carbon dioxide so that loss of calcium ions by precipitation is prevented. However, a flotation operation has proven to be a good choice for a removal process.

The pH in a post-flotation operation of a de-inking process is typically best suited for the removal of sitckies. The pH of the suspension should be adjusted with carbon dioxide to a value which prevents or at least significantly reduces precipitation of calcium carbonate in said suspension. The aim is generally to add carbon dioxide in an amount sufficient for counter-acting an increase in pH possibly caused by the removal of carbon dioxide by a flow of flotation gas through the suspension in a flotation operation. In one embodiment of the invention the pH value is between 7.0 and 7.8. Good results have been obtained when the pH has been between 7.2 and 7.5.

The carbon dioxide is added in the form of pure carbon dioxide gas or as a mixture of carbon dioxide and other gases. It is, for instance, possible to use flue gases containing carbon dioxide.

The amount of carbon dioxide added to the suspension can be measured according to the desired pH. Typically, it is sufficient to add 0.5 to 7 kg carbon dioxide per ton dry fiber. Normally 1.5 to 5 kg carbon dioxide per ton dry fiber is enough.

Adding carbon dioxide according to the invention to a post-flotation step reduces the precipitation of calcium carbonate and the amount of calcium carbonate in the flotation reject. At the same time, the calcium oxide content in the reject ash of the flotation is reduced compared to a flotation without carbon dioxide.

The carbon dioxide may be added directly to the pulp suspension before it enters the process used for the removal of the stickies or to water used for diluting the suspension prior to said removal step. When the suspension is subjected to post-flotation it generally has a consistency between 0.1 and 2 and the carbon dioxide is typically added to the suspension up-stream of the flotation for providing a sufficient contact time of the carbon dioxide in the suspension. The carbon dioxide or additional carbon dioxide may be added to the pulp suspension during the flotation.

Addition of carbon dioxide according to the invention is effective in stabilizing the pH, alkalinity and/or hardness of the pulp suspension. In the operation of the invention it has been found that good results with removal of micro stickies and colloidal stickies have been obtained when the amount of calcium ions in the aqueous phase of the suspension has been controlled to a value of more than 100 mg Ca²⁺/l. Most of the calcium derives from the recovered paper. The amount of calcium ions is controlled by preventing precipitation of calcium carbonate and possibly also by causing dissolution of calcium carbonate.

When carbon dioxide is used according the present invention in papermaking, the process will have less problems with secondary stickies than if no carbon dioxide had been used. The over-all benefits include a cleaner process and a paper with an improved quality compared to prior art process. The improved quality of the deinked pulp can be used to produce paper containing more deinked pulp and less fresh pulp.

The invention will now be illustrated with some examples.

### Example 1

### (Reference)

In a paper mill producing paper from 100% deinked pulp, recovered paper was disintegrated in a pulper and fed to a first circulation loop with a primary flotation step and a subsequent peroxide bleaching of the primary deinked pulp.

The bleached pulp having a consistency after dewatering of about 30% was diluted in a second water circulation loop with back water having a pH of 7.5 to 7.7 to a consistency of about 1%. The diluted pulp was then fed to a post-flotation unit. Air was used in the flotation as flotation gas.

The pH of the fluid entering the post-flotation unit was 7.5 to 7.8. In the flotation process, the pH rose to 8.3 and calcium carbonate precipitated in the suspension. Solid calcium carbonate particles rose to the surface with the ink particles and were removed from the surface with the reject. When the reject was incinerated, the calcium oxide content was so high that the ash had a pH of 11, which made its transportation and handling difficult and costly.

Samples of the reject were analysed to check the removal of micro stickies and colloidal stickies in the flotation. For the analysis, a sample of reject filtrate and a sample of accept filtrate were dried and extracted with an organic solvent. The extracts were measured by HPLC. There was no significant difference in the amount of extracted synthetic polymers in the two samples. This indicated that the flotation did not effectively remove stickies from the pulp suspension.

The deinked pulp suspension was used to produce paper in a conventional process for making paper from deinked pulp. The pH was adjusted in the papermaking process with sulfuric acid. The paper produced from the deinked pulp had a number of black spots indicating the presence of secondary stickies in the process.

### Example 2

The process according to Example 1 was changed so that gaseous carbon dioxide was injected into the pulp suspension in connection with the dilution of the pulp after bleaching. The pH of the pulp suspension was monitored after the carbon dioxide addition and the amount of carbon dioxide was adjusted so that a pH of 7.2 to 7.3 was obtained.

Although the pH of the suspension rose slightly during the flotation, the pH remained below 7.5 and the calcium carbonate precipitation was significantly reduced. The reject consequently contained less calcium carbonate and the reject ash contained less calcium oxide. At the same time, the aqueous phase of the pulp suspension contained more calcium ions. The pH of the reject ash from the flotation was reduced to 9 and its handling and transportation was uncomplicated.

Samples were taken again from both reject and accept. This time it was found that the solvent extracted reject contained a significantly higher amount of synthetic polymers than the accept. This indicates that the carbon dioxide controlled flotation was significantly more effective in removing micro stickies and colloidal stickies than the conventional flotation.

### Example 3

A laboratory test was performed to verify the findings of Example 2. A laboratory flotation unit was charged with 8 liters of a pulp suspension at a consistency of 1-1.5 %. The pH of the suspension was 7.8. Air was fed into the suspension as flotation gas. The suspension was mixed by a mixer.

When no carbon dioxide was added to the suspension, the pH rose in 5 to 6 minutes to 8.3 and calcium carbonate started to precipitate. The calcium ion concentration (measured as hardness) was reduced. There was no difference in the level of synthetic polymers in the extract from the reject and the accept, respectively.

To test the influence of carbon dioxide, the suspension was acidified by injection of varying amounts of gaseous carbon dioxide to lower the pH to values between 6.5 and 8.2.

As long as the pH remained under pH 8.3, no significant precipitation of calcium carbonate could be seen. The hardness remained at a high level and even increased at the lower pH levels. The accept extract contained slightly less synthetic polymers than the extract (the amount of extract was so small in the laboratory test that no significant values could be obtained).

### Example 4

A full-scale trial of the present invention was performed in a paper mill using deinked pulp. Carbon dioxide was added into a filtrate (back water), which was used for diluting a peroxide bleached pulp suspension prior to a post-flotation step. The amount of carbon dioxide was set to 1.5-2 kg CO₂/ton of dry fiber.

Alkalinity, hardness, dissolved calcium, pH and the amount of polyvinyl acetate in extracts of accept filtrate and reject filtrate, respectively, were measured on collected samples.

The table below shows results from the reference and the trial period.

| | Reference | | CO₂ addition | |
|---|---|---|---|---|
| Sample point | 1 | 2 | 3 | 4 |
| 1. Sample point before CO₂ injection | | | | |
| Alkalinity [mmol/l] | 16.2 | 12 | | |
| Hardness [°dH] | 10 | 12.6 | 15 | |
| Cₐ²⁺ [mg/l] | 72 | 90 | 107 | |
| pH | 8.4 | 8.3 | 7,8 | 7,9 |

| 2. Inlet to post-flotation | | | | |
|---|---|---|---|---|
| Alkalinity [mmol/l] | 15 | 13.6 | | |
| Hardness [°dH] | 9 | 13.8 | 22.4 | |
| Cₐ²⁺ [mg/l] | 64 | 99 | 160 | |
| pH | 8.3 | 8.3 | 7.3 | 7.3 |
| PVAc [% of extract] | 0.270 | 2.260 | 0.330 | 0.200 |

| 3. Accept from post-flotation | | | | |
|---|---|---|---|---|
| Alkalinity [mmol/l] | 13 | 12.2 | | |
| Hardness [°dH] | 8 | 11.6 | 15 | |
| Ca²⁺ [mg/l] | 57 | 83 | 107 | |
| pH | 8.2 | 8.3 | 7.2 | 7.2 |
| PVAc [% of extract] | 1.060 | 1.700 | 0.230 | 0.540 |

| 4. Reject from post-flotation | | | | |
|---|---|---|---|---|
| Alkalinity [mmol/l] | 13.4 | 11.8 | | |
| Hardness [°dH] | 11 | 11.8 | 12,8 | |
| Ca²⁺ [mg/l] | 79 | 84 | 92 | |
| pH | 8.2 | 8.3 | 7.2 | 7.3 |
| PVAc [% of extract] | 0.840 | 1.870 | 2.290 | 2.860 |

The pH of the pulp entering the flotation step was reduced from 8.3 to 7.3 by the added carbon dioxide. The pH reduction increased the amount of calcium ions in the flotation system and levels above 100 mg/l were measured.

The amount of synthetic polymers in the extracts of accept and reject were analysed. It was found that the amount of polyvinyl acetate was considerably reduced in the accept sample from the post-flotation, when carbon dioxide was added to the flotation system. In contrast the removal of polyvinyl acetate was almost non-existent and the amount was unchanged between accept and reject samples during the reference period.

The carbon dioxide addition prior to the post-flotation had also a positive effect on the dewatering of the disc filter and press after the post-flotation. The consistency of the pulp increased on the disc filter from 8.6 % to 9.4 % and on the press from 32.4 % to 34.2 % (average values).

The present invention has been described above with reference to the use of carbon dioxide in a post-flotation process. However, the invention works also under similar conditions in other unit operations as described above.

## Claims

1. Use of carbon dioxide for the removal of stickies from a pulp suspension containing recycled fibers, calcium ions and stickies, wherein said carbon dioxide adjusts the pH of said suspension and wherein agglomerates containing stickies and calcium ions are removed by flotation.

2. The use according to claim 1, wherein said stickies are selected from micro stickies and colloidal stickies.

3. The use according to claim 1, wherein said removal comprises deinking flotation.

4. The use of carbon dioxide for decreasing the content of calcium carbonate in flotation reject.

5. The use of carbon dioxide for decreasing the content of calcium oxide in flotation reject ash.

6. A process for the removal of stickies from a pulp suspension, comprising
- providing an aqueous pulp suspension containing recycled fibers, calcium ions and stickies;
- adding carbon dioxide to said pulp suspension for adjusting the pH of said suspension to a value below 8.3 to control the amount of calcium ions in said suspension by preventing precipitation of calcium carbonate;
- causing stickies contained in said suspension to agglomerate with said calcium ions;
- removing said agglomerates from said suspension by flotation; and;
- subjecting the resulting pulp suspension to a series of papermaking steps to produce paper or board.

7. The process according to claim 6, wherein said stickies include micro stickies and/or colloidal stickies with a negative charge.

8. The process according to claim 6 or 7, wherein said removal of agglomerated stickies is performed in a post-flotation operation of a de-inking process.

9. The process according to claim 8, wherein said flotation is a post-flotation operation and stickies derived from polyvinyl acetate are caused to accumulate in the reject of said post-floatation.

10. The process according to claim 6, wherein said pH value is between 7.0 and 7.8, preferably between 7.2 and 7.5.

11. The process according to claim 6, wherein the amount of carbon dioxide added is 0.5 to 7 kg/ton dry fiber, preferably 1.5 to 5 kg/ton dry fiber.

12. The process according to claim 6, wherein the amount of calcium ions in the aqueous phase of said suspension is controlled to a value of more than 100 mg Ca²⁺/l.

13. The process according to claim 8, wherein said carbon dioxide is added directly to said pulp suspension before it enters said flotation step or to water used for diluting said suspension prior to said flotation step.

14. The process according to claim 13, wherein said carbon dioxide is added to said suspension up-stream of said flotation for providing a sufficient contact time of said carbon dioxide in said suspension.

15. The process according to claim 7, wherein said carbon dioxide or additional carbon dioxide is added to said pulp suspension during said flotation.

16. The process according to claim 6, wherein said carbon dioxide is added in an amount which is effective in stabilizing the pH, alkalinity and/or hardness of said pulp suspension.

17. The process according to claim 6 wherein said carbon dioxide is added in an amount which is effective in improving the dewatering in a disc filter down-stream of said addition of carbon dioxide.

18. A process according to claim 6 for using carbon dioxide in papermaking comprising the steps of
- providing an aqueous pulp suspension containing recycled fibers, calcium carbonate, calcium ions and stickies;
- adding carbon dioxide to said pulp suspension in an amount sufficient for adjusting the pH of said suspension to a value below 8.3;
- controlling the amount of carbon dioxide added so as to provide in said pulp suspension an amount of calcium ions in excess of 100 mg Ca²⁺/l;
- causing stickies contained in said suspension to agglomerate with said calcium ions;
- removing said agglomerates from said suspension by flotation; and
- subjecting the resulting pulp suspension to a series of papermaking steps to produce paper or board.

## Patentansprüche

1. Verwendung von Kohlendioxid für die Beseitigung klebriger Verunreinigungen (Stickies) aus einer Faserstoffsuspension, die Sekundärfasern, Calciumionen und Stickies enthält, wobei das Kohlendioxid den pH-Wert dieser Suspension einstellt und wobei Agglomerate, die Stickies und Calciumionen enthalten, durch Flotation entfernt werden.

2. Verwendung nach Anspruch 1, wobei diese Stickies aus Mikrostickies und kolloidalen Stickies gewählt sind.

3. Verwendung nach Anspruch 1, wobei diese Beseitigung die Deinkingflotation umfasst.

4. Verwendung von Kohlendioxid für die Reduzierung des Calciumcarbonat-Gehalts im Flotationsrejekt.

5. Verwendung von Kohlendioxid für die Reduzierung des Calciumoxid-Gehalts in der Asche des Flotationsrejekts.

6. Verfahren zur Beseitigung von Stickies aus einer Faserstoffsuspension, umfassend
- Bereitstellen einer wässrigen Faserstoffsuspension, die Sekundärfasern, Calciumionen und Stickies enthält;
- Zugabe von Kohlendioxid zu dieser Faserstoffsuspension zwecks Einstellung des pH-Werts dieser Suspension auf einen Wert von unter 8,3, um durch Verhinderung der Ausfällung von Calciumcarbonat die Menge an Calciumionen in dieser Suspension zu kontrollieren;
- Bewirken der Agglomeration von in dieser Suspension enthaltenen Stickies mit diesen Calciumionen;
- Beseitigen dieser Agglomerate aus dieser Suspension durch Flotation; und
- Weiterverwenden der resultierenden Faserstoffsuspension in einer Reihe von Prozessstufen der Papierherstellung zur Produktion von Papier oder Karton.

7. Verfahren nach Anspruch 6, wobei diese Stickies Mikrostickies und/oder kolloidale Stickies mit einer negativen Ladung beinhalten.

8. Verfahren nach Anspruch 6 oder 7, wobei diese Beseitigung agglomerierter Stickies in einem Nachflotationsvorgang eines Deinking-Prozesses durchgeführt wird.

9. Verfahren nach Anspruch 8, wobei diese Flotation ein Nachflotationsvorgang ist und von Polyvinylacetat herstammende Stickies im Rejekt dieser Nachflotation zur Akkumulation gebracht werden.

10. Verfahren nach Anspruch 6, wobei dieser pH-Wert zwischen 7,0 und 7,8, vorzugsweise zwischen 7,2 und 7,5 liegt.

11. Verfahren nach Anspruch 6, wobei die Kohlendioxid-Zugabemenge 0,5 bis 7 kg/Tonne Trockenfaserstoff, vorzugsweise 1,5 bis 5 kg/Tonne Trockenfaserstoff beträgt.

12. Verfahren nach Anspruch 6, wobei die Menge an Calciumionen in der wässrigen Phase dieser Suspension auf einen Wert von mehr als 100 mg Ca²⁺/l kontrolliert wird.

13. Verfahren nach Anspruch 8, wobei dieses Kohlendioxid direkt in die Faserstoffsuspension, bevor diese in die Flotationsstufe einläuft, oder in Wasser, das für die Verdünnung der Faserstoffsuspension vor dem Flotationsschritt verwendet wird, gegeben wird.

14. Verfahren nach Anspruch 13, wobei dieses Kohlendioxid der Suspension im Vorfeld der Flotation zugegeben wird, um eine ausreichende Kontaktzeit dieses Kohlendioxids in der Suspension zu gewährleisten.

15. Verfahren nach Anspruch 7, wobei dieses Kohlendioxid oder zusätzliches Kohlendioxid dieser Faserstoffsuspension während der Flotation zugegeben wird.

16. Verfahren nach Anspruch 6, wobei dieses Kohlendioxid in einer Menge zugegeben wird, die bei der Stabilisierung des pH-Werts, der Alkalität und/oder Härte dieser Faserstoffsuspension wirksam ist.

17. Verfahren nach Anspruch 6, wobei dieses Kohlendioxid in einer Menge zugegeben wird, die bei der Verbesserung der Entwässerung in einem der Kohlendioxid-Zugabe nachgeschalteten Scheibenfilter wirksam ist.

18. Verfahren nach Anspruch 6 für die Verwendung von Kohlendioxid bei der Papierherstellung, wobei das Verfahren die folgenden Schritte umfasst:
- Bereitstellen einer wässrigen Faserstoffsuspension, die Sekundärfasern, Calciumcarbonat, Calciumionen und Stickies enthält;
- Zugabe von Kohlendioxid zu dieser Faserstoffsuspension in einer Menge, die ausreichend ist, um den pH-Wert dieser Suspension auf einen Wert von unter 8,3 einzustellen;
- Kontrollieren der Kohlendioxid-Zugabemenge, um in dieser Faserstoffsuspension Calciumionen in einer Menge von über 100 mg Ca²⁺/l zu gewährleisten;
- Bewirken der Agglomeration von in dieser Suspension enthaltenen Stickies mit diesen Calciumionen;
- Beseitigen dieser Agglomerate aus dieser Suspension durch Flotation; und
- Weiterverwenden der resultierenden Faserstoffsuspension in einer Reihe von Prozessstufen der Papierherstellung zur Produktion von Papier oder Karton.

## Revendications

1. Utilisation de dioxyde de carbone pour l'élimination de matières collantes d'une suspension de pâte à papier contenant des fibres recyclées, des ions calcium et des matières collantes, dans laquelle ledit dioxyde de carbone permet d'ajuster le pH de ladite suspension et dans laquelle les agglomérats contenant les matières collantes et les ions calcium sont éliminés par flottation.

2. Utilisation selon la revendication 1, dans laquelle lesdites matières collantes sont choisies parmi les micro-matières collantes et les matières collantes colloïdales.

3. Utilisation selon la revendication 1, dans laquelle ladite élimination comprend une flottation de désencrage.

4. Utilisation de dioxyde de carbone pour diminuer la teneur en carbonate de calcium dans le rejet de flottation.

5. Utilisation de dioxyde de carbone pour diminuer la teneur en oxyde de calcium dans la cendre de rejet de flottation.

6. Procédé d'élimination de matières collantes d'une suspension de pâte à papier, comprenant les étapes consistant à
- se procurer une suspension aqueuse de pâte à papier contenant des fibres recyclées, des ions calcium et des matières collantes ;
- ajouter du dioxyde de carbone à ladite suspension de pâte à papier pour ajuster le pH de ladite suspension à une valeur inférieure à 8,3 pour limiter la quantité d'ions calcium dans ladite suspension en empêchant la précipitation de carbonate de calcium ;
- faire en sorte que les matières collantes contenues dans ladite suspension s'agglomèrent avec lesdits ions calcium ;
- éliminer lesdits agglomérats de ladite suspension par flottation ; et
- soumettre la suspension de pâte à papier résultante à une série d'étapes de fabrication du papier pour produire du papier ou du carton.

7. Procédé selon la revendication 6, dans lequel lesdites matières collantes contiennent des micro-matières collantes et/ou des matières collantes colloïdales de charge négative.

8. Procédé selon la revendication 6 ou 7, dans lequel ladite élimination de matières collantes agglomérées est réalisée dans une opération post-flottation d'un procédé de désencrage.

9. Procédé selon la revendication 8, dans lequel ladite flottation est une opération post-flottation et on fait s'accumuler les matières collantes dérivées de poly(acétate de vinyle) dans le rejet de ladite post-flottation.

10. Procédé selon la revendication 6, dans lequel le pH est compris entre 7,0 et 7,8, de préférence entre 7,2 et 7,5.

11. Procédé selon la revendication 6, dans lequel la quantité de dioxyde de carbone ajoutée est de 0,5 à 7 kg/tonne de fibre sèche, de préférence de 1,5 à 5 kg/tonne de fibre sèche.

12. Procédé selon la revendication 6, dans lequel la quantité d'ions calcium dans la phase aqueuse de ladite suspension est réglée à une valeur de plus de 100 mg de Ca²⁺/l_{.}

13. Procédé selon la revendication 8, dans lequel ledit dioxyde de carbone est ajouté directement à ladite suspension de pâte à papier avant qu'elle entre dans ladite étape de flottation ou à l'eau utilisée pour diluer ladite suspension avant ladite étape de flottation.

14. Procédé selon la revendication 13, dans lequel ledit dioxyde de carbone est ajouté à ladite suspension en amont de ladite flottation pour procurer un temps de contact suffisant dudit dioxyde de carbone dans ladite suspension.

15. Procédé selon la revendication 7, dans lequel ledit dioxyde de carbone ou dioxyde de carbone supplémentaire est ajouté à ladite suspension de pâte à papier pendant ladite flottation.

16. Procédé selon la revendication 6, dans lequel ledit dioxyde de carbone est ajouté dans une quantité qui est efficace pour stabiliser le pH, l'alcalinité et/ou la dureté de ladite suspension de pâte à papier.

17. Procédé selon la revendication 6 dans laquelle ledit dioxyde de carbone est ajouté dans une quantité qui est efficace pour améliorer l'assèchement dans un filtre à disques en aval de ladite addition de dioxyde de carbone.

18. Procédé selon la revendication 6 permettant d'utiliser du dioxyde de carbone dans la fabrication du papier comprenant les étapes consistant à
- se procurer une suspension aqueuse de pâte à papier contenant des fibres recyclées, du carbonate de calcium, des ions calcium et des matières collantes ;
- ajouter du dioxyde de carbone à ladite suspension de pâte à papier dans une quantité suffisante pour ajuster le pH de ladite suspension à une valeur inférieure à 8, 3 ;
- régler la quantité de dioxyde de carbone ajoutée de façon à avoir dans ladite suspension de pâte à papier une quantité d'ions calcium dépassant 100 mg Ca2⁺/l ;
- faire en sorte que les matières collantes contenues dans ladite suspension s'agglomèrent avec lesdits ions calcium ;
- éliminer lesdits agglomérats de ladite suspension par flottation ; et
- soumettre la suspension de pâte à papier résultante à une série d'étapes de fabrication du papier pour produire du papier ou du carton.
